# EUROPEAN PATENT APPLICATION

(11) **EP 4 815 604 A1**
(43) Date of publication of application: **30.09.2026**
(21) Application number: 23959282.7
(22) Date of filing: 24.11.2023
(51) Int. Cl.: H04W 72/541

(54) **WIRELESS COMMUNICATION METHOD AND COMMUNICATION DEVICE**

(71) Applicant: GUANGDONG OPPO MOBILE TELECOMMUNICATIONS CORP., LTD., Dongguan, Guangdong 523860 (CN)
(72) Inventor: DU, Zhongda, Dongguan, Guangdong 523860 (CN)
(74) Representative: RGTH
(86) International application number: PCT/CN2023/134098
(87) International publication number: WO 2025/107313

(57) **Abstract**

Provided are a wireless communication method and a communication device. The method comprises: a first device determining whether the first device is located in an edge region of a coverage range of a second device; and if the first device is located in the edge region, the first device communicating with the second device by means of a first channel, the first channel being a working channel corresponding to the edge region. In the present application, when the first device is located in the edge region of the coverage range of the second device, a working channel corresponding to the edge region of the second device is used for performing communicate with the second device, which facilitates avoiding interference of a working channel adjacent to the second device when the edge region is overlapped.

## Description

### TECHNICAL FIELD

This application relates to the field of communications technologies, and more specifically, to a wireless communication method and a communications device.

### BACKGROUND

In some wireless communications systems, such as an internet of things (internet of thing, IoT) communications system, coverage of different network devices may overlap to some extent. However, in an overlapping region of coverage, communication between a network device and a terminal device corresponding to the network device may be interfered with by a neighboring network device, thus affecting communication quality.

### SUMMARY

This application provides a wireless communication method and a communications device. Various aspects of this application are described below.

According to a first aspect, a wireless communication method is provided, and the method includes: determining, by a first device, whether the first device is located in an edge area of coverage of a second device; and communicating, by the first device, with the second device by using a first channel in a case that the first device is located in the edge area, where the first channel is a working channel corresponding to the edge area.

According to a second aspect, a wireless communication method is provided, and the method includes: transmitting, by a second device, first information to a first device, where the first information is used to indicate one or more of the following: a first channel; or a first threshold. The first channel is a working channel corresponding to an edge area of coverage of the second device, and the first threshold is used by the first device to determine whether to use the first channel.

According to a third aspect, a first device is provided, and the first device includes: a determining module, configured to determine whether the first device is located in an edge area of coverage of a second device; and a communications module, configured to: communicate with the second device by using a first channel in a case that the first device is located in the edge area, where the first channel is a working channel corresponding to the edge area.

According to a fourth aspect, a second device is provided, and the second device includes: a transmitting module, configured to transmit first information to a first device, where the first information is used to indicate one or more of the following: a first channel; or a first threshold. The first channel is a working channel corresponding to an edge area of coverage of the second device, and the first threshold is used by the first device to determine whether to use the first channel.

According to a fifth aspect, a first device is provided. The first device includes a memory and a processor, where the memory is configured to store a program, and the processor is configured to invoke the program in the memory to cause the first device to execute the method according to the first aspect.

According to a sixth aspect, a second device is provided. The second device includes a memory and a processor, where the memory is configured to store a program, and the processor is configured to invoke the program in the memory to cause the second device to execute the method according to the second aspect.

According to a seventh aspect, an apparatus is provided, including a processor configured to invoke a program from a memory, to cause the apparatus to execute the method according to the first aspect or the second aspect.

According to an eighth aspect, a chip is provided, including a processor configured to invoke a program from a memory, to cause a device installed with the chip to execute the method according to the first aspect or the second aspect.

According to a ninth aspect, a computer-readable storage medium is provided, storing a program, where the program causes a computer to execute the method according to the first aspect or the second aspect.

According to a tenth aspect, a computer program product is provided, including a program, where the program causes a computer to execute the method according to the first aspect or the second aspect.

According to an eleventh aspect, a computer program is provided, where the computer program causes a computer to execute the method according to the first aspect or the second aspect.

In this application, when a first device is located in an edge area of coverage of a second device, the first device communicates with the second device by using a working channel corresponding to the edge area of the second device, which helps avoid interference from a working channel of an adjacent second device caused when edge areas overlap.

### BRIEF DESCRIPTION OF DRAWINGS

FIG. 1 is a schematic diagram of a wireless communications system to which embodiments of this application are applicable.
FIG. 2 is a schematic diagram of an IoT communications system to which embodiments of this application are applicable.
FIG. 3A to FIG. 3D are schematic diagrams of network structures of IoT communications systems.
FIG. 4 is a schematic structural diagram of an RF receiver.
FIG. 5 is a schematic structural diagram of an intermediate frequency receiver.
FIG. 6 is a schematic diagram showing overlap in coverage of readers.
FIG. 7 is a schematic flowchart of a wireless communication method according to an embodiment of this application.
FIG. 8 is a schematic diagram of distribution of different channels on a same carrier.
FIG. 9 is another example diagram of a wireless communication method according to an embodiment of this application.
FIG. 10 is a schematic structural diagram of a first device according to an embodiment of this application.
FIG. 11 is a schematic structural diagram of a second device according to an embodiment of this application.
FIG. 12 is a schematic diagram of a structure of a communications apparatus according to an embodiment of this application.

### DESCRIPTION OF EMBODIMENTS

Technical solutions in this application are described below with reference to the accompanying drawings.

### Communications system architecture

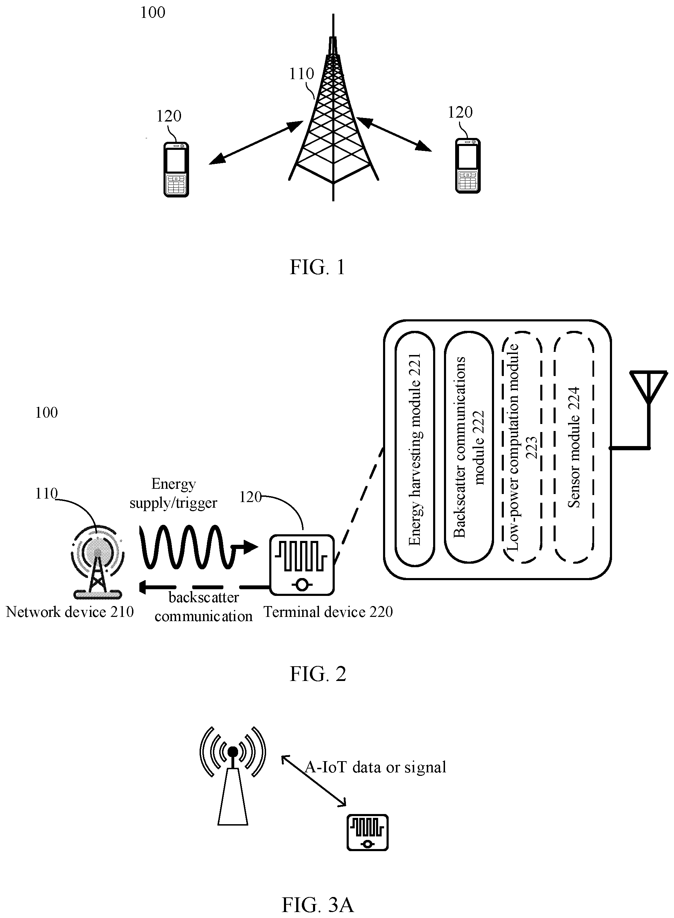

FIG. 1 is an example diagram of a system architecture of a wireless communications system 100 to which embodiments of this application are applicable. The wireless communications system 100 may include a network device 110 and a terminal device 120. The network device 110 may be a device that communicates with the terminal device 120. The network device 110 may provide communication coverage for a specific geographic area, and may communicate with a terminal device 120 within the coverage.

FIG. 1 shows one network device and one terminal device as an example. Optionally, the wireless communications system 100 may include one or more network devices 110, and/or one or more terminal devices 120. For a network device 110, the one or more terminal devices 120 may be located within network coverage of the network device 110, or may be located outside network coverage of the network device 110, or may be located partially within the network coverage of the network device 110, and may be located partially outside the network coverage of the network device 110, which is not limited in embodiments of this application.

Optionally, the wireless communications system 100 may further include another network entity such as a network controller or a mobility management entity, which is not limited in embodiments of this application.

It should be understood that the technical solutions in embodiments of this application may be applied to various communications systems, for example, a fifth generation (5th generation, 5G) system or a new radio (new radio, NR) system, a long term evolution (long term evolution, LTE) system, an LTE frequency division duplex (frequency division duplex, FDD) system, and an LTE time division duplex (time division duplex, TDD) system. The technical solutions provided in this application may further be applied to a future communications system, such as a 6th generation mobile communications system or a satellite communications system.

The terminal device in embodiments of this application may also be referred to as a user equipment (user equipment, UE), an access terminal, a subscriber unit, a subscriber station, a mobile site, a mobile station (mobile station, MS), a mobile terminal (mobile terminal, MT), a remote station, a remote terminal, a mobile device, a user terminal, a terminal, a wireless communications device, a user agent, or a user apparatus. The terminal device in embodiments of this application may be a device providing a user with voice and/or data connectivity and capable of connecting people, objects, and machines, such as a handheld device or a vehicle-mounted device having a wireless connection function. The terminal device in embodiments of this application may be a mobile phone (mobile phone), a tablet computer (Pad), a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in smart grid (smart grid), a wireless terminal in transportation safety (transportation safety), a wireless terminal in smart city (smart city), a wireless terminal in smart home (smart home), or the like. Optionally, the UE may be configured to function as a base station. For example, the UE may function as a scheduling entity, which provides a sidelink signal between UEs in vehicle-to-everything (vehicle-to-everything, V2X), device-to-device (device to device, D2D), or the like. For example, a cellular phone and a vehicle communicate with each other through a sidelink signal. A cellular phone and a smart home device communicate with each other, without relaying a communication signal through a base station.

The network device in embodiments of this application may be a device configured to communicate with the terminal device. The network device may also be referred to as an access network device or a radio access network device. For example, the network device may be a base station. The network device in embodiments of this application may be a radio access network (radio access network, RAN) node (or device) that connects the terminal device to a wireless network. The base station may broadly cover various names in the following, or may be interchanged with the devices having the following names, for example, a NodeB (NodeB), an evolved NodeB (evolved NodeB, eNB), a next generation NodeB (next generation NodeB, gNB), a relay station, an access point, a transmitting and receiving point (transmitting and receiving point, TRP), a transmitting point (transmitting point, TP), a master eNode MeNB, a secondary eNode SeNB, a multi-standard radio (MSR) node, a home base station, a network controller, an access node, a wireless node, an access point (access point, AP), a transmission node, a transceiver node, a base band unit (base band unit, BBU), a remote radio unit (Remote Radio Unit, RRU), an active antenna unit (active antenna unit, AAU), a remote radio head (remote radio head, RRH), a central unit (central unit, CU), a distributed unit (distributed unit, DU), and a positioning node. The base station may be a macro base station, a micro base station, a relay node, a donor node, or the like, or a combination thereof. Alternatively, the base station may be a communications module, a modem, or a chip disposed in the device or apparatus described above. Alternatively, the base station may be a mobile switching center, a device that functions as a base station in device-to-device D2D, V2X, or machine-to-machine (machine-to-machine, M2M) communications, a network-side device in a 6G network, a device that functions as a base station in a future communications system, or the like. The base station may support networks of a same access technology or different access technologies. A specific technology and a specific device used by the network device are not limited in embodiments of this application.

The base station may be a stationary or mobile base station. For example, a helicopter or an unmanned aerial vehicle may be configured to act as a mobile base station, and one or more cells may move based on a position of the mobile base station. In another example, a helicopter or an unmanned aerial vehicle may be configured to serve as a device in communication with another base station.

In some deployments, the network device in embodiments of this application may be a CU or a DU, or the network device may include a CU and a DU. The gNB may further include an AAU.

The network device and the terminal device may be deployed on land, including being indoors or outdoors, handheld, or vehicle-mounted, may be deployed on a water surface, or may be deployed on a plane, a balloon, or a satellite in the air. In embodiments of this application, a scenario of the network device and the terminal device is not limited.

### IoT technology

The rise of the IoT technology poses a new challenge to a communications system. A use scenario of an IoT terminal device may include logistics, warehousing, factory automation, livestock, and the like. Intermittent simple communication or rough location tracking may be performed between the IoT terminal device and a network device. Even the simplest IoT terminal device, such as an NB-IoT terminal device used for coal meter measurement, requires a battery to provide energy. However, although energy consumption of the IoT terminal device is very low, a battery inside the IoT terminal device can only last for a few years at most and will eventually be depleted. Therefore, the battery of the IoT terminal device needs to be replaced regularly, which consumes a large amount of manual labor. Moreover, some industrial scenarios are not suitable for manual operation due to inherent dangers. Therefore, a battery-free IoT terminal device emerges as required.

A quantity of battery-free IoT terminal devices is large and the cost is low. Generally, manual maintenance is not required after installation. A radio frequency identification (radio frequency identification, RFID) terminal device may meet a requirement for a battery-free IoT terminal device to some extent. However, operation of RFID systems still requires human involvement, for example, manual handheld readers (reader) are required in some RFID systems. In addition, wireless coverage of a single RFID reader is limited (within 10 meters). Therefore, RFID systems deployed on a large scale require more human involvement. For example, it takes a lot of manpower, resources, and time to conduct inventory of goods in a large supermarket by using an RFID system.

### IoT communications system

Transplanting a system such as an RFID into a cellular network may effectively solve the problem of limited coverage, because cellular networks (such as 4th generation (4th generation, 4G) and 5G systems) have already achieved nationwide coverage or at least coverage of major cities in some countries or regions (such as China, Europe, and the United States). Based on a broader network coverage, a communication or positioning process between an IoT terminal device and a network device may not require human involvement. Therefore, the IoT terminal device may work continuously, and working efficiency is high. In addition, the IoT terminal device may even work efficiently in an environment unsuitable for humans (such as a wilderness, a mine, or a factory). Therefore, during application of the IoT terminal device, apart from the initial step of associating the IoT terminal device with a specific object, subsequent data read/write and operation and maintenance may be performed by means of, for example, an application (application, App) on a smartphone, which is very convenient and efficient. Such a communications system may be referred to as an IoT communications system or a zero-power communications system.

As shown in FIG. 2, the IoT communications system may include a network device 210 and a terminal device 220. The network device 210 may be referred to as a reader, and the terminal device 220 may be referred to as a tag (tag). The IoT communications system uses energy harvesting and backscatter communication technologies, and the network device 210 may transmit a wireless energy supply signal and a downlink communication signal to the terminal device 220, and receive a backscatter signal from the terminal device 220. A basic terminal device 220 may include an energy harvesting module 221, a backscatter communications module 222, and a low-power computation module 223. In addition, the terminal device 220 may further include a memory module (not shown in the figure), configured to store some basic information (such as an article identity). Alternatively, the terminal device 220 may include a sensor module 224 for acquiring sensing data such as an ambient temperature and an ambient humidity.

Use cases of the IoT communications system may include four major categories: inventory (inventory), sensor (sensor), tracking (tracking), and command (command). Inventory refers to checking for missing items when goods enter or leave a warehouse. Common sensors may include temperature, pressure, humidity, and other sensors, and the sensors may be used in industrial, agricultural, and smart city applications or the like, and information collected by the sensors may be uploaded to a third-party APP through the IoT system for monitoring and management. Tracking generally refers to acquiring an approximate location of an object from time to time, for example, a user can learn a location of his/her package in real time through a smartphone. Command refers to operating a servo mechanism through the IoT system, and the servo mechanism may be connected to an IoT terminal device. For example, people may water the flowers and plants in the backyard through a mobile phone App while working or resting in the office, where the watering servo mechanism may be connected to a specific IoT terminal device.

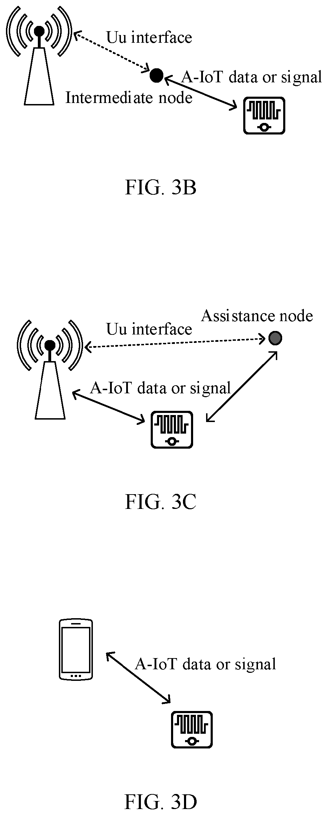

A network structure of the IoT communications system may be shown in FIG. 3, including 4 types of topology network structures. Energy source of IoT terminal devices comes from the surrounding environment, such as radio frequency (radio frequency, RF), solar energy, thermal energy, mechanical vibration, wind energy, or the like. The IoT terminal devices may be divided into 3 types, namely type A, type B, and type C. Type A and type B terminal devices can only communicate by reflecting and modulating received radio waves, and this communication method is called back-scattering (back-scattering). That is to say, type A and type B terminal devices cannot actively transmit radio signals, and power thereof ranges from 1 to 10 microwatts (uW). Type A terminal devices have the lowest transmit power and the lowest hardware complexity, basically close to a level of an RFID terminal device. Type B terminal devices have slightly more complex hardware, which may include signal amplification devices and specific energy storage devices, and thus a communication distance between a type B terminal device and a network device is farther compared to that between a type A terminal device and the network device. Type C terminal devices have a capability to actively transmit radio waves, with a transmit power ranging approximately from 1 to 10 milliwatts (mW), and can store a specific amount of energy. All three types of terminal devices can harvest energy from the environment and can work continuously for several years or more than 10 years. In addition, type A and type B terminal devices are basically in a sleep state before the network device triggers a communication process with them in order to save energy. Only after being activated by a wireless signal from the network device, type A and type B terminal devices start working.

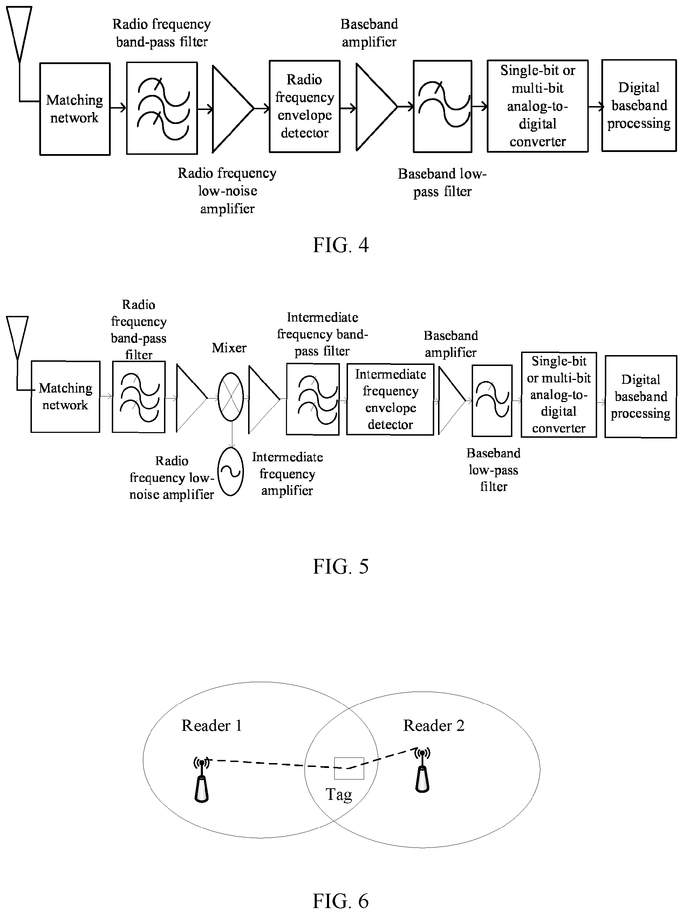

Receivers of IoT terminal devices may include two major types, namely type 1 and type 2. A type 1 receiver is a wideband receiver, and this type of receiver is also called an RF receiver. The RF receiver may acquire signals to be received within a bandwidth range based on a radio frequency band-pass filter, and then perform envelope detection and subsequent baseband processing. The RF receiver has the simplest structure, with a minimum power consumption of up to several uW or less. However, because of poor accuracy of the radio frequency band-pass filter, even when a target signal occupies a narrow bandwidth, the RF receiver usually receives a signal in a relatively wide bandwidth. Therefore, a relatively large quantity of noise and interference are introduced in a receiving process of the RF receiver, and receiving performance of the RF receiver is poor, or in other words, receiving sensitivity is poor. A typical receiving process of the RF receiver may be shown in FIG. 4.

A type 2 receiver is a narrowband receiver, such as an intermediate frequency receiver or a zero intermediate frequency receiver. In signal reception, the narrowband receiver, in addition to using a radio frequency band-pass filter to obtain a signal to be received in a bandwidth range, may also perform down-conversion on an RF signal, and further perform filtering on a baseband signal by using a low-pass filter to eliminate noise and interference. Therefore, a receive band width of the narrowband receiver is narrow, and receiving performance of the narrowband receiver is good, or in other words, receiving sensitivity is relatively high. However, the narrowband receiver needs to use a local oscillator (local oscillator, LO). The power consumption of an LO is relatively high, and even a recommended LO needs to consume 100uW or even higher power. Therefore, the relative power consumption of the narrowband receiver is relatively high. However, because the absolute power consumption of the narrowband receiver is very low, the narrowband receiver is still applicable to a zero-power device. A typical receiving process of an intermediate frequency receiver may be shown in FIG. 5.

The foregoing type A terminal devices usually adopt broadband receivers, type C communications devices usually adopt narrowband receivers, and the type B terminal devices may adopt one or two types of receivers.

When a reader of an RFID system is working, it may be assumed that a tag only communicates with one reader. Unlike the RFID system, a tag in an IoT system may communicate with different readers. This is because coverage of the IoT system is relatively wide, and coverage of different readers may overlap. Therefore, as shown in FIG. 6, a tag may be within coverage of different readers. However, to improve degree of frequency reuse, frequency resources used by different readers are often the same. In addition, a quantity of channels on a carrier is also limited, so different readers may also adopt similar or the same approach in channelization. Therefore, there may be some interference between working channels of adjacent readers, thus affecting communication with the tag.

For example, for a typical application scenario of an inventory service in the IoT system, a large quantity of tags needs to access the system in a short time. However, when a tag responds to a trigger message from a reader and starts to initiate an initial access procedure, a message transmitted by the tag is easily received by a plurality of adjacent readers. Similarly, signals transmitted from different readers are also easily received by the same tag. That is to say, if there are tags in an overlapping area of coverage between readers, there may be uplink and downlink interference between these tags and adjacent readers.

For a broadband system, such as an LTE/NR system, the foregoing problem can be solved by using related technologies. For example, when a UE is in an idle state, cell selection and reselection mechanisms may effectively allow the UE to camp on a cell with the strongest signal. After the UE initiates a call, if the UE is within an overlapping area of coverage of two base stations, some interference cancellation methods may also be adopted to randomize the interference or minimize consequences caused by the interference. However, for a narrowband system, such as the IoT system, a power of a tag is limited, and it may be difficult to meet a requirement of the cell selection and reselection mechanisms. In addition, the hardware of a tag is relatively simple, and it is also difficult to support dynamic interference cancellation methods. Therefore, a problem of interference in an overlapping area in narrowband systems still needs to be solved.

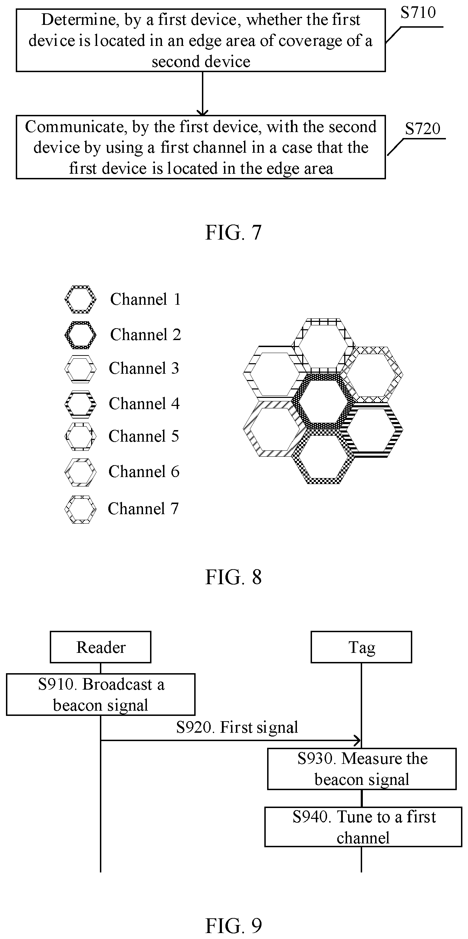

In view of this, a wireless communication method according to an embodiment of this application is described below in detail with reference to FIG. 7. The method shown in FIG. 7 is applicable to any terminal device and/or network device described above. For ease of understanding, the following uses a first device and a second device to represent devices that are applicable to the method.

The first device in this embodiment of this application may be a terminal device. For example, the first device may be a tag. The second device may be a terminal device and/or a network device. For example, the second device may be an intelligent read/write device.

The solution in this embodiment of this application may be applied to an IoT communications system. For example, the first device and the second device may be devices in the IoT communications system.

The solution in this embodiment of this application may be applied to the service scenarios described above. For example, the solution in this embodiment of this application may be applied to one or more of the following service scenarios: inventory, sensor, tracking, or command.

As shown in FIG. 7, the method includes steps S710 and S720.

In step S710, the first device determines whether the first device is located in an edge area of coverage of a second device. Edge areas of coverage of different second devices may have some overlaps, so communication between the first device and the second device in this area may be interfered with by an adjacent second device.

In step S720, in a case that the first device is in the edge area, the first device may communicate with the second device by using a first channel, and the first channel may be a working channel corresponding to the edge area of the second device. The first channel may be different from a working channel of a neighboring second device in the edge area. For example, the first channel may be a channel that is not adjacent to the working channel of the neighboring second device in the edge area.

Based on the method shown in FIG. 7, when the first device is located in the edge area of the coverage of the second device, the first device communicates with the second device by using the working channel corresponding to the edge area of the second device, which helps avoid interference from a working channel of an adjacent second device caused when edge areas overlap.

The following describes in detail how the first device determines whether the first device is located in an edge area of coverage of the second device. Step S710 in FIG. 7 may further include step S711 and step S712. In step S711, the first device measures a first signal transmitted by the second device. In step S712, the first device determines, based on signal quality of the first signal, whether the first device is in the edge area. The signal quality of the first signal may be reduced as a distance between the first device and the second device increases. Therefore, the signal quality of the first signal may effectively reflect the distance between the first device and the second device. Further, the first device may determine, based on a first threshold, whether the first device is in the edge area. If the signal quality of the first signal is less than the first threshold, the first device may determine that the first device is in the edge area. For example, the first threshold may be a strength threshold of the first signal. When the strength of the first signal is less than the threshold, the first device may determine that the first device is in the edge area.

For different second devices, the first thresholds and/or the first channels are different. Therefore, the second devices may notify the first device of the first thresholds and/or the first channels corresponding to the second devices.

In some implementations, the second devices may notify the first device of the first thresholds and/or the first channels by using the first signal. As an example, the first signal may include first information, and the first information may be used to indicate the first threshold and/or the first channel. When determining, based on the first signal, that the first device is in the edge area, the first device may be directly connected to the second device by using the first channel indicated by the first information.

In another implementation, the second device may also notify the first device of the first threshold and/or the first channel by using a downlink message. As an example, before the first device receives the first signal transmitted by the second device, the method shown in FIG. 7 may further include step S730. In step S730, after the first device is successfully connected to the second device, the first device receives the first information transmitted by the second device. The first information may be used to indicate one or more of the following: a first threshold; a first channel; or identification information of the second device. The identification information of the second device may be used to identify the second device, so that the first device determines a correspondence between the first threshold and/or the first channel and the second device. Further, the first signal may also include the identification information of the second device. The first device may use, in the edge area, the first channel corresponding to the second device when the first device is connected to the second device next time.

The first signal may be a beacon (beacon) signal, and power consumption of transmitting the beacon signal is relatively low, which helps to save power. Alternatively, the first signal may be a broadcast signal that carries system information. The first signal may be a periodic signal, and optional periods may be specific several periods.

The foregoing second device may be one of a plurality of second devices, and coverage edges of neighboring devices in the plurality of second devices may correspond to different working channels. For example, adjacent second devices may use non-adjacent working channels at the coverage edge. Further, a plurality of second devices in the system may perform some coordination, so that working channels of edge areas of adjacent devices are staggered from each other.

With reference to FIG. 8, the following provides an example of how the second device selects a working channel at the edge area. FIG. 8 is a schematic diagram of distribution of different channels on a same carrier, and a plurality of different channels may be provided to a plurality of second devices. Two adjacent second devices may select two staggered channels, for example, a channel 1 and a channel 5, as working channels for edge areas of their respective coverage.

In the foregoing method, if the first device is located in a non-edge area in coverage of the second device, or the first device has not received the first channel and/or the first threshold, the first device may randomly select a working channel. For example, the first device may be set with a working carrier and a working channel at delivery, and the working channel may be set as a working channel randomly selected from a plurality of channels corresponding to the working carrier.

The following uses an example in which the first device is a tag, and the second device is a reader. With reference to FIG. 9, an application of the method shown in FIG. 7 in the IoT communications system is described by using an example. The reader is a node that has point-to-point communication with the tag, and may be a base station, a mobile phone, or any other network node that supports an IoT communications protocol. A network is a general term for network nodes including the reader, and may include nodes that separately provide backscatter radio waves. The IoT communications system corresponding to FIG. 9 may operate on a carrier, and the carrier may be further divided into a plurality of channels. The communications system may correspond to a plurality of readers, and first channels corresponding to neighboring readers are staggered from each other.

The method illustrated in FIG. 9 may include steps S910 to S940.

In step S910, a reader broadcasts a beacon signal. The beacon signal includes a first threshold and indication information of a first channel, and the first threshold is a strength threshold of the beacon signal.

In step S920, a tag receives the beacon signal. The tag may receive the beacon signal by finding a location of the beacon signal in time domain. For example, the tag may perform blind detection in time domain in a specific scanning method. After receiving the beacon signal, the tag may find a period of the beacon signal in a specific method.

In step S930, the tag measures the beacon signal. The tag may receive the beacon signal for a plurality of times based on the period of the beacon signal, so as to measure a signal strength of the beacon signal.

In step S940, the tag tunes to the first channel as a working channel between the tag and the reader. In this case, signal strength of the beacon signal measured by the tag is less than a first threshold, and a working channel currently set by the tag is not the first channel.

Based on the method shown in FIG. 9, the tag uses the first channel as a working channel in the edge area of the reader, so as to help avoid interference from an adjacent reader.

The foregoing describes the method embodiments of this application in detail. The following describes apparatus embodiments of this application in detail. It should be understood that the descriptions of the method embodiments correspond to descriptions of the apparatus embodiments, and therefore, for parts that are not described in detail, reference may be made to the foregoing method embodiments.

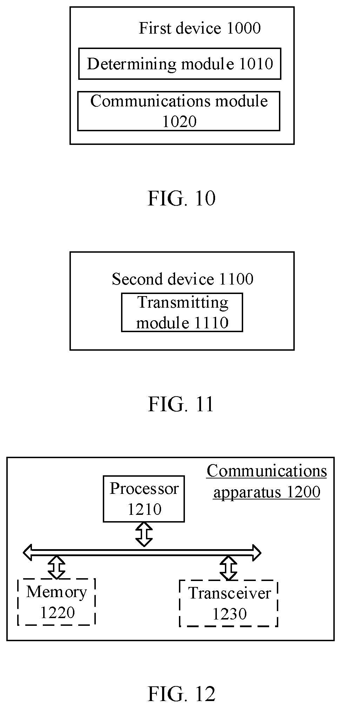

FIG. 10 is a schematic structural diagram of a first device according to an embodiment of this application. The first device 1000 in FIG. 10 includes a determining module 1010 and a communications module 1020. The determining module 1010 is configured to determine whether the first device is located in an edge area of coverage of a second device. The communications module 1020 is configured to communicate with the second device by using a first channel in a case that the first device is located in the edge area, where the first channel is a working channel corresponding to the edge area.

In some implementations, the determining module 1010 may be further configured to measure a first signal transmitted by the second device. The determining module 1010 may determine, based on signal quality of the first signal, whether the first device is in the edge area.

In some implementations, if the signal quality of the first signal is less than a first threshold, the determining module 1010 may determine that the first device is in the edge area.

In some implementations, the first signal may include first information, and the first information may be used to indicate one or more of the following: a first threshold; or a first channel.

In some implementations, before the first device receives the first signal transmitted by the second device, the communications module 1020 may be further configured to: after the first device is successfully connected to the second device, receive the first information transmitted by the second device, where the first information may be used to indicate one or more of the following: a first threshold; a first channel; identification information of the second device.

In some implementations, the first signal may include the identification information of the second device.

In some implementations, the first signal may be a beacon signal. Alternatively, the first signal may be a broadcast signal that carries system information.

In some implementations, the second device may be one of a plurality of second devices, and coverage edges of neighboring devices in the plurality of second devices may correspond to different working channels.

In some implementations, the first device may be a tag, and the second device may be a terminal device or a network device.

FIG. 11 is a schematic structural diagram of a second device according to an embodiment of this application. The second device 1100 in FIG. 11 includes a transmitting module 1110, and the transmitting module 1110 may be configured to transmit first information to a first device. The first information may be used to indicate one or more of the following: a first channel; or a first threshold. The first channel may be a working channel corresponding to an edge area of coverage of the second device, and the first threshold may be used by the first device to determine whether to use the first channel.

In some implementations, the transmitting module 1110 may be further configured to transmit a first signal to the first device, where the first threshold is a threshold of signal quality of the first signal.

In some implementations, the first information may be carried in the first signal.

In some implementations, the first information may be further used to indicate identification information of a second device.

In some implementations, the first signal may include the identification information of the second device.

In some implementations, the first signal may be a beacon signal. Alternatively, the first signal may be a broadcast signal that carries system information.

In some implementations, the second device may be one of a plurality of second devices, and coverage edges of neighboring devices in the plurality of second devices may correspond to different working channels.

In some implementations, the first device may be a tag, and the second device may be a terminal device or a network device.

FIG. 12 is a schematic diagram of a structure of a communications apparatus according to an embodiment of this application. The communications apparatus 1200 in FIG. 12 may be configured to implement the methods described in the foregoing method embodiments. The apparatus 1200 may be a chip, a terminal device, or a base station.

The communications apparatus 1200 may include one or more processors 1210. The processor 1210 may support the apparatus 1200 in implementing the methods described in the foregoing method embodiments. The processor 1210 may be a general-purpose processor or a dedicated processor. For example, the processor may be a central processing unit (central processing unit, CPU). Alternatively, the processor may be another general-purpose processor, a digital signal processor (digital signal processor, DSP), an application-specific integrated circuit (application specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

The communications apparatus 1200 may further include one or more memories 1220. The memory 1220 stores a program, where the program may be executed by the processor 1210, to cause the processor 1210 to execute the methods described in the method embodiments. The memory 1220 may be separate from or integrated into the processor 1210.

The communications apparatus 1200 may further include a transceiver 1230. The processor 1210 may communicate with another device or chip by using the transceiver 1230. For example, the processor 1210 may transmit data to and receive data from another device or chip through the transceiver 1230.

It should be understood that in this embodiment of this application, the processor 1210 may be a general-purpose central processing unit (central processing unit, CPU), a microprocessor, an application-specific integrated circuit (application specific integrated circuit, ASIC), or one or more integrated circuits, and is configured to execute a related program to implement the technical solutions provided in embodiments of this application.

The memory 1220 may include a read-only memory and a random access memory, and provide instructions and data to the processor 1210. A part of the processor 1210 may further include a non-volatile random access memory. For example, the processor 1210 may further store information about a device type.

In an implementation process, each step of the foregoing method may be completed by using an integrated logic circuit of hardware in the processor 1210 or an instruction in a form of software. The method for requesting an uplink transmission resource disclosed with reference to embodiments of this application may be directly performed by using a hardware processor, or may be performed by using a combination of hardware in the processor and a software module. The software module may be located in a mature storage medium in the art, for example, a random access memory, a flash memory, a read-only memory, a programmable read-only memory, an electrically erasable programmable memory, or a register. The storage medium is located in the memory 1220, and the processor 1210 reads information in the memory 1220 and completes the steps in the foregoing methods in combination with hardware of the processor. To avoid repetition, details are not described herein again.

It should be understood that the processor 1210 in embodiments of this specification may be a central processing unit (central processing unit, CPU), or the processor may be another general-purpose processor, a digital signal processor (digital signal processor, DSP), an application-specific integrated circuit (application specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

An embodiment of this application further provides a computer-readable storage medium for storing a program. The computer-readable storage medium may be applied to the first device or the second device provided in embodiments of this application, and the program causes a computer to execute the wireless communication method in various embodiments of this application.

An embodiment of this application further provides a computer program product. The computer program product includes a program. The computer program product may be applied to the first device or the second device provided in embodiments of this application, and the program causes a computer to execute the wireless communication method in various embodiments of this application.

An embodiment of this application further provides a computer program. The computer program may be applied to the first device or the second device provided in embodiments of this application, and the computer program causes a computer to execute the wireless communication method in various embodiments of this application.

It should be understood that all or some of functions of the communications device in this application may alternatively be implemented by software functions running on hardware, or by virtualization functions instantiated on a platform (for example, a cloud platform).

It should be understood that the terms "system" and "network" in this application may be used interchangeably. In addition, the terms used in this application are used only to illustrate specific embodiments of this application, but are not intended to limit this application. The terms "first", "second", "third", "fourth", and the like in the specification, claims, and drawings of this application are used to distinguish between different objects, rather than to describe a specific order. In addition, the terms "include" and "have" and any variations thereof are intended to cover a non-exclusive inclusion.

In embodiments of this application, "indication" mentioned herein may refer to a direct indication, or may refer to an indirect indication, or may mean that there is an association relationship. For example, if A indicates B, it may mean that A directly indicates B, for example, B may be obtained from A. Alternatively, it may mean that A indicates B indirectly, for example, A indicates C, and B may be obtained from C. Alternatively, it may mean that there is an association relationship between A and B.

In embodiments of this application, the term "correspond" may mean that there is a direct or indirect correspondence between the two, or may mean that there is an association relationship between the two, or may mean that there is a relationship such as indicating and being indicated, or configuring and being configured.

In embodiments of this application, the term "and/or" describes merely an association relationship between associated objects, and represents that there may be three relationships. For example, A and/or B may represent three cases: only A exists, both A and B exist, and only B exists. In addition, the character "/" in this specification generally indicates an "or" relationship between the associated objects.

In embodiments of this application, the "include" may refer to direct inclusion, or may refer to indirect inclusion. Optionally, the term "include" mentioned in embodiments of this application may be replaced with "indicate" or "be used to determine". For example, A including B may be replaced with that A indicates B, or A is used to determine B.

In embodiments of this application, sequence numbers of the foregoing processes do not mean execution orders. The execution orders of the processes should be determined based on functions and internal logic of the processes, and should not be construed as any limitation on the implementation processes of embodiments of this application.

In several embodiments provided in this application, it should be understood that the disclosed system, apparatus, and method may be implemented in another manner. For example, the described apparatus embodiments are merely examples. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented as indirect couplings or communication connections through some interfaces, apparatus or units, and may be implemented in electronic, mechanical, or other forms.

The units described as separate parts may or may not be physically separate, and parts displayed as units may or may not be physical units, and may be located in one position, or may be distributed on a plurality of network units. Some or all of the units may be selected according to actual needs to achieve the objective of the solutions of embodiments.

In addition, functional units in embodiments of this application may be integrated into one processing unit, or each of the units may exist alone physically, or two or more units may be integrated into one unit.

All or some of the foregoing embodiments may be implemented by using software, hardware, firmware, or any combination thereof. When software is used to implement embodiments, the foregoing embodiments may be implemented completely or partially in a form of a computer program product. The computer program product includes one or more computer instructions. When the computer program instructions are loaded and executed on a computer, the procedures or functions according to embodiments of this application are completely or partially generated. The computer may be a general-purpose computer, a dedicated computer, a computer network, or another programmable apparatus. The computer instructions may be stored in a computer-readable storage medium or transmitted from one computer-readable storage medium to another computer-readable storage medium. For example, the computer instructions may be transmitted from a website, computer, server, or data center to another website, computer, server, or data center in a wired (for example, a coaxial cable, an optical fiber, and a digital subscriber line (digital subscriber line, DSL)) manner or a wireless (for example, infrared, wireless, and microwave) manner. The computer-readable storage medium may be any usable medium readable by the computer, or a data storage device, such as a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium (for example, a solid-state drive (solid state disk, SSD)), or the like.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

1. A wireless communication method, comprising:
determining, by a first device, whether the first device is located in an edge area of coverage of a second device; and
communicating, by the first device, with the second device by using a first channel in a case that the first device is located in the edge area, wherein the first channel is a working channel corresponding to the edge area.

2. The method according to claim 1, wherein the determining, by the first device, whether the first device is located in the edge area of coverage of the second device comprises:
measuring, by the first device, a first signal transmitted by the second device; and
determining, by the first device based on signal quality of the first signal, whether the first device is located in the edge area.

3. The method according to claim 2, wherein the determining, by the first device based on the signal quality of the first signal, whether the first device is located in the edge area comprises:
in a case that the signal quality of the first signal is less than a first threshold, determining, by the first device, that the first device is located in the edge area.

4. The method according to claim 3, wherein the first signal comprises first information, and the first information is used to indicate one or more of following:
the first threshold; or
the first channel.

5. The method according to claim 3, wherein before the first device receives the first signal transmitted by the second device, the method further comprises:
after the first device is successfully connected to the second device, receiving, by the first device, first information transmitted by the second device, wherein the first information is used to indicate one or more of following:
the first threshold;
the first channel; or
identification information of the second device.

6. The method according to claim 5, wherein the first signal comprises the identification information of the second device.

7. The method according to any one of claims 2 to 6, wherein the first signal is a beacon signal; or the first signal is a broadcast signal that carries system information.

8. The method according to any one of claims 1 to 7, wherein the second device is one of a plurality of second devices, and coverage edges of neighboring devices in the plurality of second devices correspond to different working channels.

9. The method according to any one of claims 1 to 8, wherein the first device is a tag, and the second device is a terminal device or a network device.

10. A wireless communication method, comprising:
transmitting, by a second device, first information to a first device, wherein the first information is used to indicate one or more of following:
a first channel; or
a first threshold,
wherein the first channel is a working channel corresponding to an edge area of coverage of the second device, and the first threshold is used by the first device to determine whether to use the first channel.

11. The method according to claim 10, wherein the method further comprises:
transmitting, by the second device, a first signal to the first device, wherein the first threshold is a threshold for signal quality of the first signal.

12. The method according to claim 11, wherein the first information is carried in the first signal.

13. The method according to claim 11, wherein the first information is further used to indicate identification information of the second device.

14. The method according to claim 13, wherein the first signal comprises the identification information of the second device.

15. The method according to any one of claims 11 to 14, wherein the first signal is a beacon signal; or the first signal is a broadcast signal that carries system information.

16. The method according to any one of claims 10 to 15, wherein the second device is one of a plurality of second devices, and coverage edges of neighboring devices in the plurality of second devices correspond to different working channels.

17. The method according to any one of claims 10 to 16, wherein the first device is a tag, and the second device is a terminal device or a network device.

18. A first device, comprising:
a determining module, configured to determine whether the first device is located in an edge area of coverage of a second device; and
a communications module, configured to: communicate with the second device by using a first channel in a case that the first device is located in the edge area, wherein the first channel is a working channel corresponding to the edge area.

19. A second device, comprising:
a transmitting module, configured to transmit first information to a first device, wherein the first information is used to indicate one or more of following:
a first channel; or
a first threshold,
wherein the first channel is a working channel corresponding to an edge area of coverage of the second device, and the first threshold is used by the first device to determine whether to use the first channel.

20. A first device, comprising a memory and a processor, wherein the memory is configured to store a program, and the processor is configured to invoke the program in the memory, to cause the first device to execute the method according to any one of claims 1 to 9.

21. A second device, comprising a memory and a processor, wherein the memory is configured to store a program, and the processor is configured to invoke the program in the memory, to cause the second device to execute the method according to any one of claims 10 to 17.

22. An apparatus, comprising a processor, configured to invoke a program from a memory, to cause the apparatus to execute the method according to any one of claims 1 to 9 or claims 10 to 17.

23. A chip, comprising a processor, configured to invoke a program from a memory, to cause a device installed with the chip to execute the method according to any one of claims 1 to 9 or claims 10 to 17.

24. A computer-readable storage medium, storing a program, wherein the program causes a computer to execute the method according to any one of claims 1 to 9 or claims 10 to 17.

25. A computer program product, comprising a program, wherein the program causes a computer to execute the method according to any one of claims 1 to 9 or claims 10 to 17.

26. A computer program, wherein the computer program causes a computer to execute the method according to any one of claims 1 to 9 or claims 10 to 17.
